**Europäisches Patentamt**

**European Patent Office**

**Office européen des brevets**

(19)

(11) Veröffentlichungsnummer : **0 353 468 B1**

(12) # EUROPÄISCHE PATENTSCHRIFT

(45) Veröffentlichungstag der Patentschrift :
20.05.92 Patentblatt 92/21

(51) Int. Cl.⁵ : **F16B 2/00, F16B 5/12**

(21) Anmeldenummer : **89112058.6**

(22) Anmeldetag : **01.07.89**

(54) **Verbindungselement.**

(30) Priorität : **30.07.88 DE 8809756 U**

(43) Veröffentlichungstag der Anmeldung :
**07.02.90 Patentblatt 90/06**

(45) Bekanntmachung des Hinweises auf die
Patenterteilung :
**20.05.92 Patentblatt 92/21**

(84) Benannte Vertragsstaaten :
**AT BE CH DE ES FR GB GR IT LI LU NL SE**

(56) Entgegenhaltungen :
**EP-A- 0 199 614**
**DD-A- 250 976**
**US-A- 4 333 211**

(73) Patentinhaber : **EJOT Eberhard Jaeger GmbH
& Co. KG
Untere Bienhecke Postfach 11 47
W-5928 Bad Laasphe- 1 (DE)**

(72) Erfinder : **Reck, Bernhard
Lahn-Dill-Strasse 48
W-3565 Achenbach (DE)**

(74) Vertreter : **Missling, Arne, Dipl.-Ing.
Patentanwalt Bismarckstrasse 43
W-6300 Giessen (DE)**

## Beschreibung

Die Erfindung bezieht sich auf ein Verbindungselement zum Verbinden zweier im Verbindungsbereich ebener, plattenförmiger Bauelemente mit einem im wesentlichen U-förmigen Klemmbereich, der aus zwei auf ein erstes Bauelement aufsteckbaren, etwa parallel verlaufenden Schenkeln besteht, die über einen Verbindungsbereich einstückig miteinander verbunden sind, wobei im Bereich des ersten Schenkels eine längliche Schraubbuchse ausgebildet ist, die zur Aufnahme eines durch eine Ausnehmung am zweiten Schenkel führbaren Befestigungselementes dient.

Es sind aus dem Stand der Technik Verbindungselemente bekannt, welche dazu dienen, an einem im wesentlichen plattenförmig oder zumindest im Befestigungsbereich plattenförmig ausgebildeten Träger ein Bauteil mittels einer lösbaren Verbindung zu befestigen. Da der plattenförmige Träger üblicherweise nicht eine ausreichende Dicke aufweist, um die Ausbildung eines Gewindes zu ermöglichen und da zum anderen der Träger vielfach als Stanzteil gefertigt wird, an welchem aus Kostengründen kein Gewinde vorgesehen werden kann, hat es sich als sachdienlich erwiesen, ein zusätzliches Einlegeteil zu verwenden, welches mit dem Träger in Eingriff gebracht wird und welches eine Befestigung mittels eines Befestigungselements, beispielsweise einer Schraube, ermöglicht. Ein derartiges Einlegeteil ist gemäß dem Stand der Technik in form eines klemmenartigen Metallbleches ausgebildet, in dem ein Teil eines Gewindeganges vorgesehen ist, in welchem eine Schraube eindrehbar ist. Der Nachteil dieser Lösung besteht darin, daß zum einen die Herstellung eines derartigen Metallteiles einen hohen produktionstechnischen Aufwand erfordert und deshalb mit hohen Kosten verbunden ist und daß zum anderen, bedingt durch die Art der Ausgestaltung des Gewindes nur geringe Einschraubkräfte aufgebracht werden können, um ein Überdrehen oder Zerstören des Gewindes zu verhindern.

Ein derartiges metallisches Einlegteil, welches auch als Klemmutter bezeichnet werden kann, wird üblicherweise durch eine Ausnehmung des Trägers durchgeführt und im Bereich einer Befestigungsausnehmung am Rande der Ausnehmung des Trägers festgeklemmt. Dieser Vorgang erweist sich bei den metallischen Einlegeteilen als besonders arbeitsintensiv, da diese dazu neigen, sich zu verklemmen oder mit dem Trägermaterial zu verhaken.

Ein gattungsgemäßes Verbindungselement ist aus der EP-A 0 199 614 bekannt. Dieses Verbindungselement besteht aus mehreren, teilweise kompliziert geformten Bauteilen, die insbesondere für ihre Herstellung aus Kunststoff teuere Werkzeuge erfordern würden. Die auf einem ersten Schenkel befestigte Schraube muß von vornherein mit einem Innengewinde versehen sein, was deren Herstellung verteuert. Des weiteren ist der Zusammenbau insofern aufwendig, da die verschiedenen Einzelteile von Hand in die richtige Lage gebracht werden müssen. ferner ist nicht sichergestellt, daß die plattenförmigen Bauteile beim Zusammenfügen im Verbindungsbereich bleiben, und zwar solange, bis die diese Teile fixierende Schraube eingedreht ist.

Der Erfindung liegt die Aufgabe zugrunde, ein Verbindungselement der eingangs genannten Art zu schaffen, welches bei einfachem Aufbau und einfacher Handhabbarkeit eine sichere Verbindung eines Bauteils mit einem Träger ermöglicht.

Die Aufgabe wird erfindungsgemäß dadurch gelöst, daß die Schraubbuchse unmittelbar am ersten Schenkel ausgebildet ist, wobei deren mit dem Befestigungselement verknüpfbare zentrische Aufnahmebohrung eine vor dem Zusammenbau glatte Innenwand besitzt, daß ferner an dem zweiten Schenkel konzentrisch zur Ausnehmung ein Zentrieransatz ausgebildet ist, der der Schraubbuchse zugewandt ist, und daß das Verbindungselement aus einem Kunststoff besteht.

Das erfindungsgemäße Verbindungselement zeichnet sich durch eine Reihe erheblicher Vorteile aus. Da an dem ersten Schenkel ein Dübelbereich vorgesehen ist, ist es möglich, ein Befestigungselement, beispielsweise eine Schraube über eine ausreichende Länge mit dem Verbindungselement in Eingriff zu bringen, so daß ausreichende Kräfte übertragbar sind. Durch die wirksame Länge des Dübelbereiches wird weiterhin die Überdrehsicherheit wesentlich erhöht, d.h. es wird die Kraft, welche zu einer Zerstörung des Gewindebereichs führen würde, wesentlich heraufgesetzt. Aus diesem Grunde ist es in besonders vorteilhafter Weise möglich, das Einschrauben einer Schraube in den Dübelbereich zu automatisieren. Ein weiterer Vorteil des erfindungsgemäßen Verbindurngselementes besteht darin, daß dieses aus Kunststoff gefertigt ist, wodurch sich die Produktionskosten erheblich senken lassen. Durch Auswahl eines geeigneten Kunststoffs als Material insbesondere für den Dübelbereich kann auch eine besonders gute Anpassung an die jeweiligen Einsatzbedingungen erfolgen, beispielsweise in dem der Reibungskoeffizient zu einer Schraube so ausgewählt wird, daß ein hohes Maß an Rüttelsicherheit gewährleistet ist, d.h. die Verbindung sich auch bei erheblichen Schwingungen nicht lockert.

Ein besonderes Anwendungsgebiet für das erfindungsgemäße Verbindungselement ist im Bereich der Armaturentafeln von Kraftfahrzeugen gegeben. Die dabei zum Einsatz kommenden Trägermaterialien sind üblicherweise aus einem thermoplastischen Werkstoff oder aus einem phenolharzgebundenen Holzfaserwerkstoff gefertigt. An einem derartigen Träger ist es zur Fertigstellung eines Armaturenbretts erforderlich, die einzelnen Elemente der Armaturentafel zu verschrauben. Diese Verschraubungen müssen bei der Montage einfach herstellbar sein und dürfen sich während des Betriebs des Kraftfahrzeuges nicht lockern. Diese Anforderungen werden in vorteilhafterweise von dem erfindungsgemäßen Verbindungselement erfüllt. Es ist erfindungsgemäß möglich, das Verbindungselement in einfacher Weise aufzustecken und auch unter Verwendung eines automatisierten Einschraubvorganges mit einer Schraube zu verbinden. Insbesondere bei Fertigung des Verbindungselements aus Kunststoff ist auch die geforderte Langzeitbeständigkeit gegeben, wobei insbesondere hinsichtlich des Korrosionsschutzes keine zusätzlichen Vorkehrungen erforderlich sind. Erfindungsgemäß ist es somit insbesondere im Automobilbau möglich, Teile der Innenraumausstattung, beispielsweise eine Radiokonsole, den Handschuhkasten, Lüftungsbedienungsteile und anderes in besonders wirkungsvoller und kostengünstiger Weise zu befestigen.

Mittels des Zentrieransatzes ist es möglich, das Verbindungselement relativ zu der Befestigungsausnehmung des Trägers zu zentrieren, um zu verhindern, daß während des Montage oder Demontagezustand das Verbindungselement von dem Träger abfällt oder seine Zuordnung zu der Befestigungsausnehmung verändert wird.

Durch Verwendung von Kunststoff als Teilewerkstoff ist eine Gewichtsersparnis von ca. 35% möglich, im Vergleich zu den nach dem Stand der Technik verwendeten Klemmteilen. Dies ist insbesondere bei der Anwendung im Automobilbau von größter Bedeutung. Die Verbindung erbringt eine sehr hohe Rüttelsicherheit und ist somit ohne zusätzliche Sicherungselemente zu montieren. Beim Stand der Technik werden z.T. Feder-Zahnoder Unterleg-Scheiben, Sicherungslack, Kleber oder Verrippungen auf der Schraubenkopfunterseite verwendet, um eine ausreichende Rüttelsicherheit zu erhalten.

Für die Montage wird nun ein sehr geringes Montagemoment erforderlich. Damit ergibt sich auch eine entsprechend niedere bleibende Vorspannkraft. Dies ist von besonderer Bedeutung bei der Verschraubung von thermoplastischen Kunststoffbauteilen, da diese unter Krafteinwirkung zum Kriechen (Relaxation) neigen. Bei den Blechklemmteilen nach dem Stand der Technik muß eine hohes Anzugsmoment verwendet werden, um eine hohes Lösemoment zu erhalten. Durch die damit gleichzeitig verbundene hohe Vorspannkraft relaxiert der Thermoplast und vermindert damit die Vorspannkraft. Mit abnehmender Vorspannkraft nimmt jedoch auch das Lösemoment ab und die Verbindung löst sich selbständig bei geringster Dynamik.

Im eingebauten Zustand stützt sich der Dübelbereich mit dem unteren Schenkel großflächig gegen das Trägermaterial ab. Damit ist eine hohe Axialkraftübertragung möglich bei gleichzeitig geringer Flächenpressung zwischen Schenkel und Trägermaterial. Geringe Flächenpressung bedeutet bei Kunststoffen ebenfalls geringe Relaxationstendenz.

Das Verbindungselement kann im Herstellungsprozess mit einem Beflockungsmaterial beschichtet werden, damit im eingebauten Zustand eine Dämpfungsschicht zwischen Bauteil und Trägermaterial bzw. Verbindungsteil mit Schenkel vorhanden ist. Beim Stand der Technik wird ein Filzstreifen aufgeklebt, was kostenintensiv ist und der Zuverlässigkeit der Montageperson ausgesetzt. Die Beflockung kann maschinell aufgebracht werden.

Der Dübelbereich ist in vorteilhafterweise im wesentlichen zylindrisch ausgebildet, wobei sich als günstig erweisen kann, den Dübelbereich mit einer zentrischen Ausnehmung zu versehen. Die zentrische Ausnehmung erweist sich insbesondere hinsichtlich der Fertigung des Verbindungselementes als besonders vorteilhaft, weiterhin ist sichergestellt, daß beim Einschrauben einer Schraube als Befestigungselement eine ausreichende Wandstärke zur Verfügung steht. Durch die zentrische Ausnehmung wird verhindert, daß der Dübelbereich beim Einschrauben einer Schraube aufreißt oder in unzulässiger Weise verformt wird.

In günstiger Weise weist der zweite Schenkel eine Ausnehmung zur Durchführung des Befestigungselements auf, so daß dieses lediglich mit dem Dübelbereich verschraubt wird. Es kann jedoch auch vorgesehen sein, zusätzlich zu dem Dübelbereich eine Verschraubung im Bereich des zweiten Schenkels vorzunehmen.

In einer besonders vorteilhaften Weiterbildung der Erfindung sind der erste und der zweite Schenkel im nicht eingesetzten Zustand in einem Winkel zueinander vorgespannt. Bei einem Aufschieben auf einen plattenförmigen Träger wird somit eine ausreichende Klemmkraft aufgebracht, um das Verbindungselement an dem Träger zu halten. Dies erweist sich insbesondere auch dann als vorteilhaft, wenn das mit dem Träger zu verbindene Bauteil später demontiert wird oder sich die Verbindung in einem teilweise gelösten Zustand befindet, da dann ein Abrutschen des Verbindungselementes in sicherer Weise unterbunden wird.

Um die Montage zu erleichtern kann erfindungsgemäß vorgesehen sein, die freien Enden der Schenkel abzurunden und/oder mit einer Anfasung zu versehen. Durch die Maßnahmen wird das Aufschieben des Verbindungselements auf den Träger wesentlich erleichtert, insbesondere ein Verhaken oder Verklemmen wird auf diese Weise praktisch völlig unterbunden.

In günstiger Weise wird das erfindungsgemäße Verbindungselement in Verbindung mit einer gewindeformenden Schraube verwendet, welche beim Einschrauben in den Dübelbereich selbsttätig ein Gewinde ausbildet.

Um die Dämpfungseigenschaften zwischen dem Träger und dem mit diesem zu verbindenen Bauteil zu erhöhen, kann es sich als besonders günstig erweisen, an dem zweiten Schenkel, d.h. an dem Schenkel des Klemmbereichs, welcher zwischen dem Bauteil und dem Träger angeordnet ist, eine Dämpfungsschicht vorzusehen oder zumindest diesen zweiten Schenkel aus einem Material mit Dämpfungseigenschaften zu fertigen. Die Einbringung eines zusätzlichen Dämpfungsmaterials, sowie dies aus dem Stand der Technik bekannt ist, bei welchem beispielsweise Filzstreifen zwischengelegt werden, erübrigt sich bei dieser Ausgestaltungsform. Vorteilhaft ist das Aufbringen einer Beflockung zur Bildung der Dämpfungsschicht.

Bei dem erfindungsgemäßen Verbindungselement erweist es sich somit als besonders vorteilhaft, daß sich die Handhabung durch die Abrundungen und die Anfasungen der Schenkel erheblich vereinfachen läßt. Weiterhin ist das Verbindungselement durch den Zentrieransatz stets in korrekter Weise zu der Befestigungsausnehmung zentriert. Dies und die hohe Überdrehsicherheit führen zu einer wesentlichen Steigerung der Montagesicherheit, welche sich insbesondere bei Verwendung automatischer Montagesysteme als besonders günstig erweist. Da das Befestigungselement, welches beispielsweise in Form einer Schraube ausgebildet ist, über eine große Länge mit dem Dübelbereich verbunden ist, ist ein hohes Maß an Auszugsfestigkeit gewährleistet. Weiterhin ist durch den Dübelbereich ein hohes Maß an Langzeitfestigkeit sichergestellt, d.h. das Verbindungselement verbleibt auch nach einer großen Anzahl von Lastwechseln in einem betriebsbereiten Zustand. Sowohl die günstige Herstellbarkeit, beispielsweise als Spritzgußteil als auch die einfache Montage führen zu einer erheblichen Kostensenkung im Vergleich zu dem bisher bekannten Verbindungselement.

Im folgenden wird die Erfindung anhand eines Ausführungsbeispiels in Verbindung mit der Zeichnung beschrieben.

Dabei zeigt:

Fig. 1 eine Schnittansicht eines erfindungsgemäßen Verbindungselements im nicht eingebauten Zustand,
Fig. 2 eine Draufsicht auf das Verbindungselement von Fig. 1 und
Fig. 3 eine Schnittansicht des erfindungsgemäßen Verbindungselements im montierten Zustand.

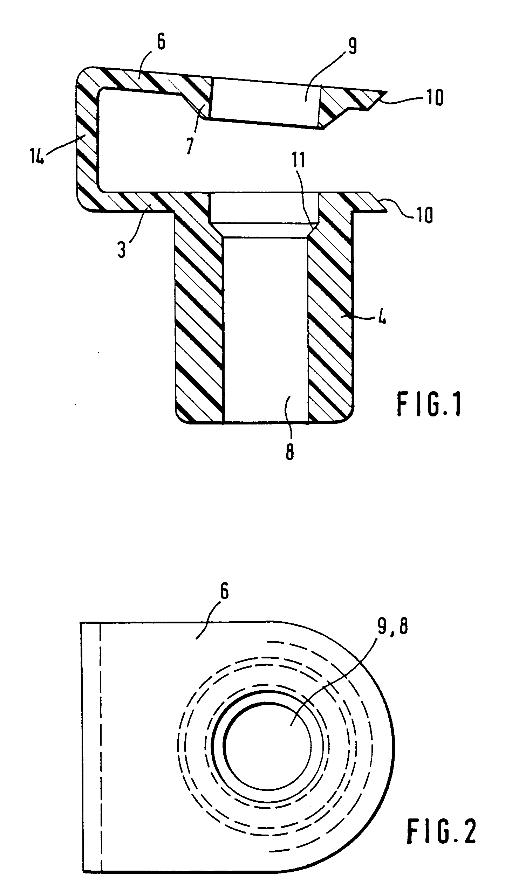

In Fig. 1 ist eine Schnittansicht des erfindungsgemäßen Verbindungselementes dargestellt. Dieses umfaßt einen ersten Schenkel 3 und einen zweiten Schenkel 6, welche im wesentlichen plattenförmig ausgebildet sind und über einen Verbindungsbereich 14 einstückig miteinander verbunden sind. Der erste Schenkel 3, der Verbindungsbereich 14 und der zweite Schenkel 6 weisen einen im wesentlichen U-förmigen Querschnitt auf.

An dem ersten Schenkel 6 ist ein im wesentlichen zylindrischer Dübelbereich 4 ausgebildet, welcher sich von der dem zweiten Schenkel 6 abgewandten Seiten des ersten Schenkels 3 aus erstreckt.

Der zweite Schenkel 6 weist an der dem ersten Schenkel 3 zugewandten Seite einen Zentrieransatz auf, welcher in Form einer Ringwulst ausgebildet ist.

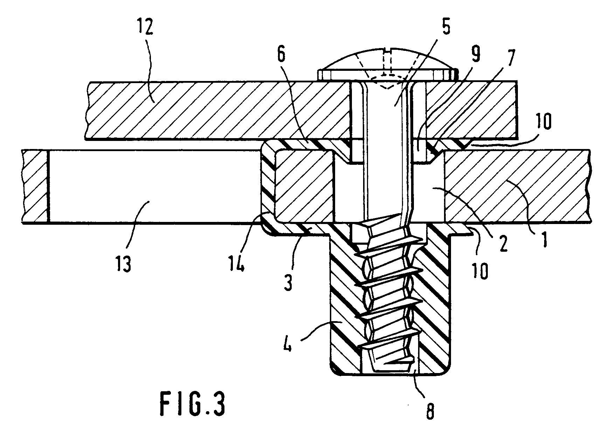

Der erste Schenkel 3 und der zweite Schenkel 6 sind in dem in Fig. 1 dargestellten, nicht montierten Zustand in einem Winkel zueinander geneigt, bzw. durch die Elastizität des Materials vorgespannt, so daß bei einem Aufschieben auf einen Träger 1 (Fig. 3) zwischen den beiden Schenkeln 3, 6 eine Klemmkraft aufgebracht wird.

Der zweite Schenkel 6 ist mit einer Ausnehmung 9 versehen, durch welche ein Befestigungselement, beispielsweise eine Schraube durchführbar ist. Weiterhin weist der Dübelbereich 4 eine zentrische Ausnehmung 8 auf, welche in etwa dem Kerndurchmesser einer Schraube entspricht und beim Einschrauben der Schraube ein Aufreißen des Dübelbereichs verhindern soll. Am Übergangsbereich zwischen dem ersten Schenkel 3 und dem Dübelbereich 4 ist weiterhin eine Anfasung 11 vorgesehen, welche die Einbringung einer Schraube oder eines Befestigungselementes in die zentrischen Ausnehmung 8 erleichtern soll.

Die Fig. 2 zeigt eine Draufsicht auf das in Fig. 1 gezeigte Verbindungselement, wobei insbesondere zu erkennen ist, daß die freien Enden der beiden Schenkel 3, 6 halbkreisförmig abgerundet sind, um das Aufschieben auf den Träger 1 zu erleichtern. Weiterhin weisen, wie Fig. 1 zeigt, die beiden Schenkel 3, 6 jeweils an Anphasung 10 auf, welche ebenfalls das Aufbringen auf einen Träger 1 erleichtern soll.

Der montierte Zustand des erfindungsgemäßen Verbindungselements ist in Fig. 3 dargestellt.

Der Träger 1 weist eine Montageausnehmung 13 aus, durch welche das Verbindungselement mit seinem ersten Schenkel 1 und den Dübelbereich 4 durchsteckbar ist. Nahe der Montageausnehmung 13 ist an dem Träger 1 eine Befestigungsausnehmung 2 ausgebildet, welche beispielsweise in Form eines runden Stanzloches gefertigt sein kann. Durch eine seitliche Verschiebung des in die Montageausnehmung 13 eingebrachten Verbindungselementes umgreifen dessen Schenkel 3, 6 den Träger 1. Bei einer weiteren Verschiebung gelangt der Zentrieransatz 7 des zweiten Schenkels 6 in die Befestigungsausnehmung 2, um eine diese Weise das Verbindungselement in seiner Position zu halten. Eine Verdrehung beim Einschrauben eines Befestigungselementes 5 wird dadurch verhindert, daß der Verbindungsbereich gegen den Rand der Montageausnehmung 13 anliegt. Durch die Klemmwirkung zwischen den Schenkeln 3, 6 wird weiterhin verhindert, daß sich das Verbindungselement von dem Träger 1 löst oder verschoben wird, bevor das Befestigungselement 5 angebracht ist.

Nachdem das Befestigungselement auf den Träger 1 aufgeschoben wurde, kann ein Bauteil 12, welches ebenfalls mit einer Ausnehmung versehen ist, angeordnet und mittels des Befestigungselements 5 verbunden werden.

Bei dem Ausführungsbeispiel ist nicht dargestellt, daß der zweite Schenkel 6 mit einer Dämpfungsschicht versehen sein kann. Diese kann in Form einer Beflockung der dem Bauteil 12 zugewandten Seite ausgebildet sein. Es ist jedoch auch möglich, zumindest den zweiten Schenkel 6 aus einem dämpfenden Material zu fertigen.

Die Erfindung ist nicht auf das gezeigte Ausführungsbeispiel beschränkt, vielmehr ergeben sich für den Fachmann im Rahmen der Erfindung vielfältige Abwandlungsmöglichkeit.

## Patentansprüche

1. Verbindungselement zum Verbinden zweier im Verbindungsbereich ebener, plattenförmiger Bauelemente (1, 12), mit einem im wesentlichen U-förmigen Klemmbereich, der aus zwei auf ein erstes Bauelement (1) aufsteckbaren, etwa parallel verlaufenden Schenkeln (3, 6) besteht, die über einen Verbindungsbereich (14) einstückig miteinander verbunden sind, wobei im Bereich des ersten Schenkels (3) eine längliche Schraubbuchse (4) ausgebildet ist, die zur Aufnahme eines durch eine Ausnehmung (9) am zweiten Schenkel (6) führbaren Befestigungselementes (5) dient, dadurch gekennzeichnet, daß die Schraubbuchse (4) unmittelbar am ersten Schenkel (3) ausgebildet ist, wobei deren mit dem Befestigungselement (5) verknüpfbare zentrische Aufnahmebohrung (8) eine vor dem Zusammenbau glatte Innenwand besitzt, daß ferner an dem zweiten Schenkel (6) konzentrisch zur Ausnehmung (9) ein Zentrieransatz (7) ausgebildet ist, der der Schraubbuchse (4) zugewandt. ist, und daß das Verbindungselement aus einem Kunststoff besteht.

2. Verbindungselement nach Anspruch 1, dadurch gekennzeichnet, daß die Schraubbuchse (4) im wesentlichen zylindrisch ausgebildet ist.

3. Verbindungselement nach Anspruch 1 oder 2, dadurch gekennzeichnet, daß die Schenkel (3, 6) im nicht eingesetzten Zustand mit einem Winkel zueinander vorgespannt sind.

4. Verbindungselement nach einem der Ansprüche 1 bis 3, dadurch gekennzeichnet, daß die freien Enden der Schenkel (3, 6) abgerundet sind.

5. Verbindungselement nach einem der Ansprüche 1 bis 4, dadurch gekennzeichnet, daß die Enden der Schenkel (3, 6) eine Anfasung (10) aufweisen.

6. Verbindungselement nach einem der Ansprüche 1 bis 5, dadurch gekennzeichnet, daß die Ausnehmung (8) der Schraubbuchse (4) eine Anfasung (11) aufweist.

7. Verbindungselement nach einem der Ansprüche 1 bis 6, dadurch gekennzeichnet, daß in die Schraubbuchse (4) eine gewindeformende Schraube einschraubbar ist.

8. Verbindungselement nach einem der Ansprüche 1 bis 7. dadurch gekennzeichnet, daß an dem zweiten Schenkel (6) eine Dämpfungsschicht vorgesehen ist.

9. Verbindungselement nach einem der Ansprüche 1 bis 8, dadurch gekennzeichnet, daß zumindest der zweite Schenkel (6) aus einem Material mit Dämpfungseigenschaften gefertigt ist.

10. Verbindungselement nach Anspruch 8 oder 9, dadurch gekennzeichnet, daß die Dämpfungsschicht aus einem Beflockungsmaterial besteht.

## Claims

1. A connecting element for conneating two plate-shaped structural elements (1, 12) which are flat in the connecting region, having a substantially U-shaped clamping region which comprises two arms (3, 6) extending approximately parallel and mountable on a first stuctural element (1), which arms are connected to each other via a connecting region (14) so as to form a single piece, wherein an elongated screw bush (4) is formed in the region of the first arm (3) and serves to accommodate a fastening element (5) which is guideable through a recess (9) on the second arm (6), characterised in that the screw bush (4) is formed directly on the first arm (3), its central accommodating bore (8), which can be combined with the fastening element (5), having a smooth inner wall before assembly, in that furthermore a centering shoulder (7) is formed on the second arm (6) concentrically to the recess (9) and faces the screw bush (4), and in that the connecting element comprises a synthetic material.

2. A connecting element according to claim 1, characterised in that the screw bush (4) is substantially cylindrically formed.

3. A connecting element according to claim 1 or 2, characterised in that the arms (3, 6) are prestressed at an angle to each other in the inoperative condition.

4. A connecting element according to any one of claims 1 to 3, characterised in that the free ends of the arms (3, 6) are rounded.

5. A connecting element according to any one of claims 1 to 4, characterised in that the ends of the arms (3, 6) have a chamfer (10).

6. A connecting element according to any one of claims 1 to 5, characterised in that the recess (8) of the screw bush (4) has a chamfer (11).

7. A connecting element according to any one of claims 1 to 6, characterised in that a thread-forming screw can be screwed into the screw bush (4).

8. A connecting element according to any one of claims 1 to 7, characterised in that a damping layer is provided on the second arm (6).

9. A connecting element according to any one of claims 1 to 8, characterised in that at least the second arm (6) is manufactured from a material with damping properties.

10. A connecting element according to claim 8 or 9, characterised in that the damping layer comprises a flocking material.


## Revendications

1. Elément de connexion permettant de relier deux éléments de construction (1, 12) en forme de plaques, plans dans la zone du raccordement, cet élément de connexion comprenant une zone de blocage sensiblement en forme de U, qui est constitué de deux branches (3, 6) s'étendant plus ou moins parallèlement et emboîtables sur un premier élément de construction (1), branches qui sont reliées l'une à l'autre d'un seul tenant par une zone de raccordement (14), la zone de la première branche (3) comportant une douille de vissage longitudinale (4) qui sert à recevoir un élément de fixation (5) que l'on peut introduire par un évidement (9) de la seconde branche (6),

caractérisé en ce que la douille de vissage (4) est conformée directement sur la première branche (3) son alésage de réception (8) central qui peut-être assemblé avec l'élément de fixation (5) présentant une paroi interne lisse avant l'assemblage,

en ce que, par ailleurs, la seconde branche (6) présente, concentriquement avec l'évidement (9), une butée de centrage (7) qui est tournée vers la douille de vissage (4),

et en ce que l'élément de connexion est en matière plastique.

2. Elément de connexion selon la revendication 1, caractérisé en ce que la douille de vissage (4) a sensiblement une forme cylindrique.

3. Elément de connexion selon la revendication 1 ou 2, caractérisé en ce que les branches (3, 6) sont précontraintes de manière à faire un angle entre elles lorsque l'élément de connexion n'est pas inséré.

4. Elément de connexion selon l'une quelconque des revendications 1 à 3, caractérisé en ce que les extrémités libres des branches (3, 6) sont arrondies.

5. Elément de connexion selon l'une quelconque des revendications 1 à 4, caractérisé en ce que les extrémités des branches (3, 6) présentent un biseau (10).

6. Elément de connexion selon l'une quelconque des de la douille de vissage (4) présente un chanfrein (11).

7. Elément de connexion selon l'une quelconque des revendications 1 à 6, caractérisé en ce qu'une vis auto-taraudeuse peut être vissée dans la douille (4).

8. Elément de connexion selon l'une quelconque des revendications 1 à 7, caractérisé en ce qu'il est prévu une couche d'amortissement sur la seconde branche (6).

9. Elément de connexion selon l'une quelconque des revendications 1 à 8, caractérisé en ce qu'au moins la seconde branche (6) est constituée d'un matériau ayant des propriétés d'amortissement.

10. Elément de connexion selon la revendication 8 ou 9, caractérisé en ce que la couche d'amortissement est constituée d'un matériau floqué.

FIG.1

FIG.2

FIG.3